(19) Europäisches Patentamt European Patent Office Office européen des brevets

(11) **EP 4 304 298 B1**

(12) **EUROPEAN PATENT SPECIFICATION**

(45) Date of publication and mention
of the grant of the patent:
**13.11.2024 Bulletin 2024/46**

(21) Application number: **22182791.8**

(22) Date of filing: **04.07.2022**

(51) International Patent Classification (IPC):
***H05B 45/50*** *(2022.01)*

(52) Cooperative Patent Classification (CPC):
**H05B 45/50; G05B 23/0283; G05B 23/0291**

(54) **DRIVER DEVICE, CONTROL CIRCUIT AND METHOD FOR OPERATING A DRIVER DEVICE WITH AN ENHANCED SERVICE LIFE**

TREIBERVORRICHTUNG, STEUERSCHALTUNG UND VERFAHREN ZUM BETREIBEN EINER TREIBERVORRICHTUNG MIT ERHÖHTER LEBENSDAUER

DISPOSITIF DE COMMANDE, CIRCUIT DE COMMANDE ET PROCÉDÉ DE FONCTIONNEMENT D'UN DISPOSITIF DE COMMANDE AYANT UNE DURÉE DE VIE AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.01.2024 Bulletin 2024/02**

(73) Proprietor: **Tridonic GmbH & Co. KG**
**6851 Dornbirn (AT)**

(72) Inventors:
• **Zengerle, Thomas**
**6850 Dornbirn (AT)**
• **Romano, Fabio**
**6850 Dornbirn (AT)**
• **König, Jakob**
**6850 Dornbirn (AT)**

(74) Representative: **Beder, Jens**
**Mitscherlich PartmbB**
**Patent- und Rechtsanwälte**
**Karlstraße 7**
**80333 München (DE)**

(56) References cited:
**WO-A1-2021/009380     US-A1- 2016 064 947**

**Description**

The invention concerns the field of power electronics and driver devices for lighting applications and luminaires. In particular, the invention proposes a driver device, a luminaire, a control circuit for a driver device, and a method for operating a luminaire with an enhanced service life.

Driver devices, also referenced as power supply devices, include electric circuits for generating a load current providing electric power to a load circuit. In lighting applications, the driver devices provide the load current to lighting modules emitting light.

The temperature experienced by an electronic circuit is a key factor for aging of the circuit elements of the electronic circuit. An increase in temperature of the electronic circuit results in a decrease in service life of the circuit elements and thus, the electronic circuit. This mechanism applies invariably in the field of power electronics. In order to meet lifetime requirements of the electronic circuit, the design engineer optimizes electronic circuit designs typically such that critical components, which are particularly temperature sensitive, e.g. electrolytic capacitors, avoid exposure to hot environments and high temperatures over extended periods of its lifetime.

The temperature is a particular important factor for power electronics, e.g. for driver devices for lighting applications, as the electronic circuits create significant amounts of heat due to circuit losses while generating the required load currents for loads such as light modules.

Nevertheless, there exist further factors, which can adversely affect the service life of an electronic circuit, e.g. excessive levels of relative humidity levels or a number of thermal cycles the electronic circuit experiences during its lifetime.

Relative humidity is a factor for outdoor applications, such as outdoor luminaires, and is also heavily influenced by temperatures differences over time.

Concerning thermal cycles experienced by the electronic circuit, the absolute number of thermal cycles, and, in particular a thermal spread of the temperature of the electronic circuit during each individual thermal cycle are crucial parameters influencing an expected service life of the electronic circuit.

Recent developments for controlling lighting networks comprising large numbers of luminaires arranged over large areas, for example outdoor luminaires of a city, introduce controlling the luminaires based on lighting demand, for example determined by presence sensors and ambient light sensors arranged integrally with the luminaires of a lighting system. Switching a luminaire between a state of emitting light and a state of not-emitting light based on the actual presence of a person in the area illuminated by the luminaire or dimming the luminaire according to a sensed ambient light level reduce significantly the energy consumption of the lighting system. The reduction in energy consumption accumulated over the luminaires of the lighting system is highly appreciated due to reducing the cost of operating the lighting system. Nevertheless, an increased number of switching cycles or dim cycles of the power electronic devices driving the light modules of the luminaires also increases the number of thermal cycles the power electronic devices experience during a predetermined time. An expected service life of each luminaire will accordingly decrease. A shorter service life of the individual luminaires will increase cost of the lighting network and thereby compensate at least partially the achieved gains in energy consumption.

US 2016/064947 A1 discloses that operations in an electronic device are adjustable based on environment data, such as temperature data and/or humidity data. The electronic device may be, for example, a receiver device or a transmitter device in an inductive energy transfer system. Example operations that may be adjusted based on environmental data include, but are not limited to, the brightness of a display or a haptic output produced by a haptic mechanism.

The invention addresses the issue of improving the service life of power electronic devices and in particular driver devices, and of light drivers in luminaires and lighting systems.

The method for operating a driver device according to a first aspect, the control circuit according to a second aspect, the driver device according to a third aspect, the luminaire according to a fourth aspect and the lighting system according to a fifth aspect each provide an advantageous solution to the issues discussed before.

The method for operating a driver device is according to claim 1, and the control circuit is according to claim 12. The driver device and the luminaire defined in the corresponding independent claims provide advantageous solutions.

The dependent claims define further advantageous features of the invention.

The method according to the first aspect controls at least one driver device, in particular a light driver, the method controlling the at least one driver device to operate in a standby mode or in a power-supplying mode. The method comprises obtaining a parameter value, evaluating the obtained parameter value to determine whether the obtained parameter value meets a lifecycle-criterion, and switching the at least one driver device into a lifetime-preserving mode in case the obtained parameter value meets the lifecycle criterion. In the lifetime-preserving mode an adjustable value of at least one operational parameter of the at least one driver device is set to reduce a temperature spread of a device temperature of the at least one driver device. The obtained parameter value comprises a current time, and evaluating the obtained parameter value includes determining whether the current time is within a period with a predicted increased frequency of the driver device switching between the power-supplying mode and the standby mode.

This enables to use the lifetime-preserving mode during times, in which a plurality of switching events between the conventional standby mode and power-supplying mode would result in a respectively high exposure from temperature cycles. The actual service life of the driver device will therefore increase due to the reduced exposure to temperature cycles.

It is generally known that the temperature of an electronic circuit represents a crucial factor for aging of the electronic circuit. The higher the temperature of an electronic circuit is during operation or even during storage, the more the aging of the electronic circuit and its components accelerates, which in turn reduces an expected service life of the electronic circuit. This applies to power electronics and driver devices also. Electronic circuits are typically designed being optimized such that critical and sensitive components, for example electrolytic capacitors, are not exhibited to excessively hot environments in order to ensure that the lifetime of the electronic power circuit meets its requirements. Known approaches to address this issue concentrate on factors such as limiting absolute temperature, avoiding large relative humidity level differences, or, more recently, to restrict a velocity of thermal cycles of the electric circuit. Contrary thereto, the proposed method according to the first aspect addresses the problem of achieving an acceptable service life by focusing on the thermal cycles itself. The method provides the frame for including the information on the actual number of thermal cycles, which the power electronic device has gone through into a specific device control strategy.

Each thermal cycle, including a heating up of the electronic circuit and a cooling down of the electronic circuit exerts adverse effects on the service life due to differences in thermal expansion coefficients of the materials the components of the electronic circuit consist of. The components include electric components, a printed circuit board, and, of particular relevance for aging processes, solder spots. For example, the Coffin-Mansion enable modelling the thermal stress that affects the components and that results from the thermal cycles. A total number of thermal cycles over a service life of the electric circuit is therefore limited until a critical circuit failure occurs. Exceeding a certain number of thermal cycles will result in circuit components, solder joints, or other strongly stressed parts of the power electronics device to fail thermo-mechanically. Reducing the temperature spread covered within the individual temperature cycles may reduce an impact of the thermal cycles the electric circuit experiences over its service life. The invention achieves effect by the specific advantage of devising a lifetime preserving mode and controlling a switchover from a power-supplying mode to the lifetime preserving mode according to the lifecycle criterion instead of switching between the standby mode and the power-supplying mode, thereby reducing the temperature spread of the temperature cycles during operation. Introducing an additional operational mode of the driver device reduces the number of thermal cycles and the negative impact of the individual thermal cycles on the service life of the driver device, e.g. due to a lower temperature spread within the thermal cycles.

Preferably, the details of the additional operation mode, the lifetime-preserving mode, are designed with regard to the adjustable parameter and the lifecycle criterion together with the user of the driver device in order to meet specific requirements of a lighting system using the driver device, for example to meet the conflicting demands of service life extension versus energy consumption. The specific requirements for a lighting system may include a power consumption of the electronic power device and the lighting requirements of the application scenario.

Contrary to the known approaches, the method does not focus on restricting a maximum temperature of the driver device, or restricting the temperature variation velocity. The presented approach bases an enhanced service lifetime on at least one of reducing the temperature spread of the individual temperature cycles and the number of temperature cycles.

In short, the invention enables providing a driver device and a luminaire with an enhanced service life using a smart thermal cycle control.

In an embodiment of the method, the at least one operational parameter includes a dim level of a power provided by the at least one driver device. Then, in the lifetime preserving mode, the at least one driver device may provide power at a second dim level lower than a first dim level in the power-supplying mode.

According to an embodiment, the method comprises obtaining data on an event and determining the period based on the obtained data on the event. The obtained data on the event includes information on switching the driver device between the standby mode and the power-supplying mode related to the event.

Therefore, the method may identify periods, in which operating in the lifetime-preserving mode is particularly advantageous with regard to an increase in service life of the driver device, while during other times the benefits of operating with switching between the standby mode and the power-supplying mode with regard to energy consumption or high output power levels may be exploited.

The method may comprise determining the period based on historic data on switching the driver device between the standby mode and the power supplying mode for a predetermined period in the past.

Thus, the period for operating in the lifetime-preserving mode for the driver device may be done at times, at which the historic data for the driver device indicates when the advantageous effect on extending the service life can be expected to be high. For these times, the disadvantages on energy consumption due to inhibiting operating in the standby mode may be less severe.

According to an embodiment, the obtained parameter value includes a count of changeover events between the standby mode and the power-supplying mode during a predetermined time interval.

Using a count of changeover events enables to using a measure indicating the amount of the thermal stress the driver device experienced due to the number of switching events between the standby mode and the power-supplying mode during the time interval. The use of the lifetime-preserving mode may then base on a specifically tailored lifecycle criterion e.g. taking account of the past exposure of thermal cycling, or identified periods with high frequency of thermal cycling in order to provide an acceptable compromise between service life and energy consumption for the user.

The obtained parameter value includes a count of temperature cycles in a temperature profile of a temperature of the driver device during a predetermined time interval.

Thus, determining whether to switch to the lifetime-preserving mode may base on information on the temperature spread experienced by the driver device in the past, and therefore directly on that parameter that influences the service life of the driver device. Driver devices often include temperature sensors, thus generating and evaluating of the temperature profile for temperature cycles does not require additional sensor hardware.

According to an embodiment, obtaining the parameter value may include applying a cycle-counting method, in particular a rainflow-counting method, on the temperature profile.

Thus, existing solutions implemented in software are adapted and used to determine a metric for indicating the exposure of the driver device to temperature spreads in the past, and to base the decision whether to switch to the lifetime-preserving mode thereon.

According to an embodiment of the method, the step of evaluating the obtained parameter value includes evaluating the count of changeover events or the count of temperature cycles based on a predetermined life expectancy of the at least one driver device and/or a predicted remaining life expectancy of the at least one driver device.

The predetermined life expectancy of the at least one driver device may comprise a total number of temperature cycles the driver device may expect to cope until a device failure will occur with a certain probability.

The predicted remaining life expectancy of the at least one driver device may comprise a remaining number of temperature cycles the driver device may expect to cope until a device failure will occur with a certain probability. The predicted remaining life expectancy may base on the total number of temperature cycles the driver device less a counted number of temperature cycles the driver device already was exposed to.

Thus, the decision whether, or how often to switch to the lifetime-preserving mode may be based on a comparison between the past exposure of the driver device to temperature cycles in relation to the predetermined capability of the driver device to cope with such temperature cycles. When the obtained parameter value bases on the counted temperature cycles, in particular on a counted number of temperature cycles with a relevant temperature spread, the lifecycle criterion may be formulated in different, but always highly relevant forms for a meaningful decision whether to switch to the lifetime-preserving mode.

For example, a total count of temperature cycles for the service life of the driver device may be distributed over the lifetime of the driver device. Switching to operating in the lifetime-preserving mode may be performed in case the counted number of temperature cycles in the predetermined time interval comes close to or reaches a number temperature cycles for the service life of the driver device allotted to the predetermined time interval.

The method may comprise the lifetime-preserving mode being configured to inhibit switching the driver device into the standby mode.

Thus, the number of temperature cycles, and/or at least the temperature spread of the temperature cycles, is reduced when compared to an operation of the driver device that allows switching between the standby mode and the power-supplying mode.

The at least one operational parameter in the lifetime-preserving mode may include a dim level for an output power or for a load current provided by the at least one driver device. In the lifetime preserving mode, a minimum dim level of the at least one driver device is set to a value larger than 0, in particular the minimum dim level threshold is set to 0.5 (50%) in a dim level range from 0 (0%) to 1 (100%).

The at least one operational parameter may include a dim level for an output power or for a load current provided by the at least one driver device. In the lifetime preserving mode), a dim level range for the dim level is set with a minimum dim level and a maximum dim level. The minimum dim level may be set to a value larger than 0 (0%) and the maximum dim level may be set to value smaller than 1 (100%) in a dim level range from 0 (0%) to 1 (100%), in particular the minimum dim level is set to 0.1 (10%), and the maximum dim level is set to 0.5 (50%).

Both examples for the operational parameter in the lifetime-preserving mode ensure that the temperature spread the driver device is exposed to is smaller than a temperature spread occurring when switching between the standby mode and the power-supplying mode. Simultaneously, the increase in power consumption due to omitting switching into standby is moderate, and a basic function of the driver device, e.g. emitting light, is still achieved. The exact design of the dim level range in the lifetime-preserving mode may be subject to optimization for each individual application scenario with an individual user.

The method of a particular may comprise switching manually by user, via a control interface, the at least one driver device into the lifetime-preserving mode.

In a second aspect, the control circuit for controlling at least one driver device, in particular a light driver, is configured to control the driver device to operate in a standby mode or in a power-supplying mode. The control circuit is configured to obtain a parameter value, to evaluate the obtained parameter value to determine whether the obtained parameter value meets a lifecycle-criterion, and to the at least one driver device into a lifetime-preserving mode in case the obtained parameter value meets the lifecycle criterion. In the lifetime-preserving mode, the control circuit is configured to adjust a value of at least one operational parameter of the at least one driver device to reduce a temperature spread of a device temperature of the at least one driver device. The obtained parameter value comprises a current time, and the control circuit evaluates the obtained parameter value including determining whether the current time is within a period with a predicted increased frequency of the driver device switching between the power-supplying mode and the standby mode.

The control circuit according to the second aspect may be part of the driver device or light driver device, in particular an integral part the driver device or light driver device.

Alternatively, the control circuit may be part of control device, in particular of a light control device or light control server. In this embodiment, the control circuit may control a plurality of driver devices.

In a third aspect, a driver device, in particular a light driver, comprises at least one converter circuit configured to provide a supply current to a load, in particular to at least one light module, and a control circuit according to the second aspect. The control circuit according to the second aspect is configured to control the at least one converter circuit.

In a fourth aspect, a luminaire, which is in particular an outdoor luminaire, comprises at least one light module for emitting light, and at least one driver device according to the third aspect for supplying the at least one light module.

A fifth aspect concerns a lighting system, which includes at least one luminaire according to the fourth aspect.

The description of embodiments refers to the enclosed figures, in which

Fig. 1     illustrates components of a luminaire for a lighting system,

Fig. 2     shows a simplified overview illustrating the operational modes and switching processes between the operational modes when operating a luminaire according to an embodiment,

Fig. 3     shows a simplified flowchart illustrating method steps for operating the luminaire according to an embodiment, in particular steps of initializing the lifetime preserving mode,

Fig. 4     shows a simplified flowchart illustrating method steps for operating the luminaire according to an embodiment, in particular steps of switching into the lifetime preserving mode,

Fig. 5     shows a simplified flowchart illustrating method steps for operating the luminaire according to an embodiment, in particular steps of operating the luminaire in the lifetime preserving mode,

Fig. 6     provides an overview over the general structure of the lighting system, and

Fig. 7     illustrates a comparison for an exemplary embodiment of the advantageous switching processes between power-supplying mode and the lifetime preserving mode compared with the switching processes between the power-supplying mode and the standby mode of prior art.

In the figures, same reference signs denote same or corresponding elements. The discussion of the figures avoids discussing same reference signs in different figures wherever deemed possible without adversely affecting comprehensibility.

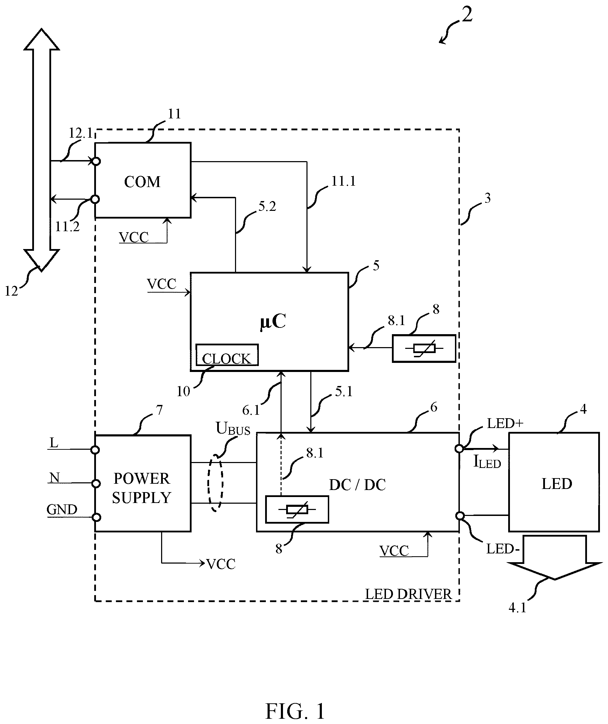

Fig. 1 illustrates major components of a luminaire 2 for application in a lighting system 1.

The luminaire 2 according to fig. 1 focusses on displaying major functional components, which are implemented using electronic circuits.

Generally, failure of an electronic circuit may occur often due to solder fatigue, which denotes a mechanical degradation of solder due to deformation under cyclic loading. This can often occur at stress levels below the yield stress of solder as result of repeated temperature fluctuations, mechanical vibrations, or mechanical loads. The present approach concentrates on temperature fluctuations, which are termed temperature cycles. A significant portion of electronic failures is thermo-mechanically driven due to temperature cycles. Under temperature cycles or thermal cycles, stresses are generated in the solder material due to mismatches of the coefficient of thermal expansion (CTE). This causes the solder joints to experience a non-recoverable deformation via creep and plasticity that accumulates and may eventually lead to degradation and eventual fracture.

During the operational lifetime of the electronic circuit, it is subject to temperature fluctuations from application-specific temperature exposure. Temperature fluctuations also occur due to self-heating of the electronic circuit and its components caused by component power dissipation corresponding to electric losses of the electronic circuit. Global and local mismatches of CTE between the components, component leads, printed circuit board substrate (PCB), and system level effects drive stresses in the interconnections, which include in particular solder joints. Repeated temperature cycling eventually leads to thermomechanical fatigue, fracture, and consequentially loss of electrical connection, thereby ending the service life (lifetime) of the electric circuit.

Solder damage models take a physics-of-failure based approach by relating a physical parameter that is a critical measure of the damage mechanism process, e.g. an inelastic strain range or dissipated strain energy density to cycles to failure. The relationship between the physical parameter and cycles to failure typically takes on a power law or modified power law relationship with material dependent model constants. These model constants are fit from experimental testing and simulation for different solder alloys in fatigue models. One specific example of a fatigue model is the Coffin-Manson model. The generalized Coffin-Manson model considers the elastic and plastic strain range by incorporating Basquin's equation

$$\frac{\Delta\varepsilon}{2} = \frac{\sigma\prime_f - \sigma_m}{E}\,(2N_f)^b + \varepsilon\prime_f\,(2N_f)^c \qquad\qquad (1)$$

In equation (1), $\Delta\varepsilon/2$ represents the elastic-plastic cyclic strain range, E represents the elastic modulus, $\sigma_m$ represents the means stress, and $N_f$ represents the cycles to failure. The remaining variables, in particular $\sigma_f$, $\varepsilon\prime_f$, $b$, and $c$ are fatigue coefficients and exponents representing material model constants. The generalized Coffin-Manson model accounts for the effects of high cycle fatigue (HCF) primarily due to elastic deformation and low cycle fatigue (LCF) primarily due to plastic deformation.

The presented method concerns an approach for limiting temperature cycles in order to mitigate the effect of thermo-mechanical failure. The temperature cycle is a variation of a temperature value over time. The variation of the temperature value corresponds to a temperature spread of the temperature cycle. A temperature cycle may be a variation of the temperature value due to a variation of ambient temperature, e.g. a day-night cycle. In context of the invention, the temperature cycle is induced predominantly by operation of the electric circuit itself, e.g. by dissipating heat due to losses in the electric components of the electric circuit. The temperature increases with a level of the output power provided by the driver device, e.g. increases with a current value of a load current provided by a driver device to a load.

Fig. 1 regards the specific example of the luminaire 2, which includes a single light driver 3, which provides an adjustable load current $I_{LED}$ to a single light module 4. Alternatively, the luminaire 2 may comprise two or even more light drivers 3. Each light driver 3 may provide a load $I_{LED}$ to one or more light modules 4 via LED outputs LED+ and LED- of the light driver 3.

The light driver 3 is a specific example for a driver device.

The light module 4 may include at least one, typically a plurality of light emitting components, which emit light 4.1 into the environment of the light module 4. The light emitting components may include a gas discharge lamp, or, preferably, a plurality of light emitting diodes (LED) electrically arranged in serial connection and/or parallel connection.

The light 4.1 may include light in at least one of the infrared range of the electromagnetic spectrum, light in the portion of the electromagnetic spectrum perceivable by the human eye or light in the ultraviolet portion of the electromagnetic spectrum.

The load current $I_{LED}$ is a dimmable electric DC current. The actual current value of the load current $I_{LED}$ measured in Ampere (A) may vary based on a dim value (dim factor) between 0 and 1, or 0% and 100%.

The light driver 3 may include at least one converter circuit 6 (DC/DC converter) that generates and outputs the load current $I_{LED}$ controlled by a control circuit 5 from a DC voltage $U_{BUS}$ provided by a mains supply interface 7.

The control circuit 5 corresponds to the control device that implement the method of operating the driver device. The term control device is used preferably when referring to a distinct device forming part of a system, e.g. the lighting system 1, in particular controlling a plurality of luminaires 2 whereas the term control circuit 5 appears appropriate for the electronic circuitry integral to the driver device respective light driver 3.

An external power source may provide the mains supply interface 7 with electric power, e.g. in form of a AC mains voltage via lines L, N, and GND connected to the mains supply interface 7. The mains supply interface 7 may perform functions including rectification, power factor correction (PFC), and/or protection from voltage peaks. The mains supply interface 7 may implement galvanic isolation for the components of the driver device 3 on a secondary low voltage side from the high voltage on a primary side, in particular from components on the AC mains voltage level.

Additionally or alternatively, the mains supply interface 7 may obtain an external DC voltage at a DC input, and generate the DC voltage $U_{BUS}$ based thereon.

The mains supply interface 7 may perform the function of low voltage power source (LVPS) by generating at least one supply voltage, in particular DC supply voltages, for the electronic circuits of the light driver 3 as illustrated in fig. 1.

The mains supply interface 7 may provide signals, e.g. status signals, to the control circuit 5 of the light driver 3, and the control circuit 5 may control the mains supply interface 7 via control signals. Additionally or alternatively, the mains supply interface 7 may include own control circuitry for controlling the functions indicated above, and further functions.

The mains supply interface 7 may include one or more switched mode power supply circuits (SMPS circuits), in which case the light driver 3 comprises a plurality of cascaded converter circuits in the mains supply interface 7 and the converter circuit 6.

Alternatively or additionally the light driver 3, e.g. the mains supply interface 7, may include means for implementing an emergency power supply in case of a mains supply failure. An internal battery, a battery charging circuit for charging the battery, and switching means for switching from the AC mains supply to battery-backed operation in case of a mains supply failure may provide power supply for driving the light module 4 from energy drawn from the battery.

The control circuit 5 may be implemented using at least on integrated circuit (IC) and may comprise at least one of an application specific integrated circuit (ASIC) and a microcontroller.

In particular, when using a microcontroller, but not limited thereto, the control circuit may include at least one memory for storing data, e.g. program data for application programs and data generated during execution of the application programs. The memory may include volatile and non-volatile memory.

The control circuit 5 includes a clock circuit 10, which generates time information, in particular information on a current time.

The control circuit 5 is configured to generate control signals for controlling the converter circuit 6. The control circuit 5 controls the electric power $P_{OUT}$ output by the converter circuit 6 in the load current $I_{LED}$ to the light module 4. Thereby, the control circuit 5 controls a light intensity of the light 4.1 emitted by the light module 4 via the control signal 5.1 to the converter circuit 6.

The term light intensity denotes a measurable parameter of the light, in terms of a brightness of the light to the human eye. Intensity may in particular define a photometric quantity measured in lumen per steradian ($lm\ sr^{-1}$). Light intensity in present context may include the term luminance, defining a photometric equivalent of the light radiance measured in lumen per steradian and per square meter ($lm\ sr^{-1}\ m^{-2}$).

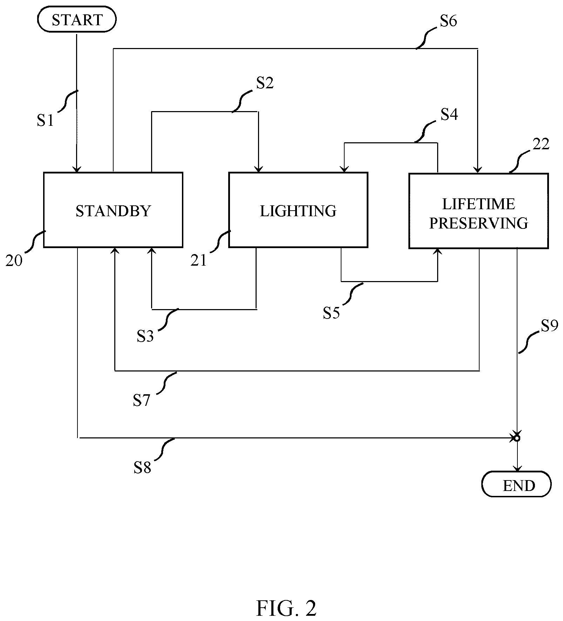

The control circuit 5 controls the converter circuit 6 to operate in a specific operational mode (selected operational mode) out of plural available operational modes. The control circuit 5 controls switchover processes of from one operational mode to another operational mode, which fig. 2 displays and the discussion of fig. 2 presents in more detail.

The operational modes comprise a standby mode 20, a power-supplying mode 21 and at least one lifetime preserving mode 22.

In the standby mode 20, the light module 4 does not emit light 4.1, and the load current $I_{LED}$ equals essentially zero. A corresponding dim level of the lighting module 4 corresponds to zero (0%).

In the power-supplying mode 21, the light module 4 emits light 4.1, the load current $I_{LED}$ output by the converter circuit 6 has a current value within a current range that exceeds zero and extends up to a maximum load current. The load current range in the power-supplying mode 21 corresponds to the dim level range of the lighting module 4 from larger than zero (0.0%) up to 1.0 (100%) for the emitted light 4.1.

In the lifetime-preserving mode 22, the light module 4 emits light 4.1, wherein at least one adjustable value of at least one parameter of the light driver 3 differs from the respective value of the at least one parameter in the standby mode 20. The adjustable parameter may for example, be the light intensity (intensity) of the light 4.1 emitted by the light module 4.

In particular, the load current $I_{LED}$ output by the converter circuit 6 in the lifetime-preserving mode 22 may have a current value that exceeds zero and even reach up to a maximum load current corresponding to the dim level of the lighting module 4 larger than zero (0.0%) to 1.0 (100%).

In the lifetime-preserving mode 22, switching the light driver 3 directly into the standby mode 20 may be inhibited.

The control circuit 5 may obtain a temperature sensor signal 8.1 including information on a device temperature (temperature information), in particular temperature information including a measurement value for an internal device temperature of the light driver 3, acquired by a temperature sensor 8 of the light driver 3 and transmitted in the temperature sensor signal 8.1.

Alternatively or additionally, the control circuit 5 may obtain the information on the device temperature in a status signal 9.1 from the converter circuit 6. The converter circuit 6 may include a temperature sensor 9, which generates a measurement value 8.1 corresponding to the current temperature of the converter circuit 6, and provides the generated measurement value 8.1 for the current temperature in the signal 6.1 to the control circuit 5.

Alternatively or additionally, the control circuit 5 may obtain the information on the device temperature, in particular a current measurement value for the device temperature by an internal temperature sensor of the control circuit 5 that fig.1 does not explicitly show.

Additionally, the control circuit 5 may obtain further temperature information on an ambient temperature in a vicinity of the light driver 3 in the environment by an external temperature sensor, which fig.1 does not explicitly depict.

The control circuit 5 may generate a temperature profile based on the time information generated and provided by the clock circuit 10 of the control circuit 5 and the temperature information. The term temperature profile denotes temperature data that includes information on how the temperature, in particular temperature information including the measurement value of the device temperature, changes as a function of the time.

The control circuit 5 may store the generated temperature profile internally in a memory of the control circuit 5. Alternatively, control circuit 5 may store the generated temperature profile in a data storage of the light driver 3 arranged externally to the control circuit 5.

The control circuit 5 may provide the generated temperature profile in a signal 5.2 to a communication module 11 of the light driver 3.

Additionally or alternatively, the control circuit 5 may provide the temperature information in the signal 5.1 to the communication module 11 of the light driver 3.

The control circuit 5 generates and outputs the control signal 5.1 to the converter circuit 6.

The control signal 5.1 may in particular include information, based on which the converter circuit 6 generates and outputs the load current $I_{LED}$. In case the converter circuit 6 includes a switched mode power supply circuit with at least one switch, the converter circuit 6 may provide a switch control signal controlling the at least one switch to switch between a conducting state and a non-conducting state, thereby controlling the power output via the load current $I_{LED}$.

The control circuit 5 may accordingly be implemented as part of the converter circuit 6.

The control circuit 5 may generate the control signal 5.1 based on control information received in a control signal 11.1 from the communication module 11. The control circuit 5 may obtain information on a current mode (operational mode) for controlling the converter circuit 6 in the control signal 11.1, for example if the light driver is to operate in the standby mode 20, or in the power-supplying mode 21, or in the lifetime-preserving mode 22.

Additionally, the control circuit 5 may obtain information on the at least one adjustable operational parameter for the lifetime-preserving mode 22 in the control signal 11.1 via the communication module 11.

Additionally, the control circuit 5 may obtain information on a lifecycle criterion in the control signal 11.1 via the communication module 11.

The communication module 11 provides external communication according to one or a plurality of different communication standards to devices external to the light driver 3.

The communication module 11 may in particular receive bus signals 12.1 via a communication bus 12 of the luminaire 2, or a communication bus of the lighting system 1. The bus signals 12.1 received by the communication module 11 may include information on an operational mode of the luminaire 2, for example on an mode to be set by the light driver 3, the operational mode to be set including the standby mode 20, the power-supplying mode 21, and the lifetime-preserving mode 22.

The communication bus 12 may communicate information from at least one light control device, the light control device including at least one of a presence sensor 13, a dimmer, an on/off-switch, a push switch, and a light control server to the communication module 11 in the bus signal 12.1.

The bus signals 12.1 received by the communication module 11 may include information on a dim level to be set by the light driver 3, in particular for adjusting the value of the load current $I_{LED}$ according to the dim level received in the bus signal 12.2.

The bus signals 12.1 received by the communication module 11 may include information on the lifetime-preserving mode 22, in particular for adjusting the value of the adjustable operational parameter or on the lifecycle criterion.

The bus signals 12.1 received by the communication module 11 may include information controlling a changeover of the light driver 3 into the lifetime-preserving mode 22, for example acquired via user interface (human machine interface 16) or a light control server (light control device 14), neither of them depicted in fig. 1. The communication module 11 provides the information received from the communication bus 12 in the bus signals 12.1 in the signal 11.1 transmitted by the communication module 11 to the control circuit 5.

The communication module 11 generates and outputs bus signals 12.2 via the communication bus 12 to other elements of the luminaire 2 connected to the communication bus 12.

Additionally, the communication module 12 may generate and output further communication signals to other devices, for example to commissioning devices or devices implementing a user interface. The further communication signals may include using further bus signals on the communication bus 12, but preferably use alternate communication capabilities provided by the communication module 11.

The communication circuit 5 may provide the capability to communicate according to at least one wired and/or wireless communication standard. The communication standards may include communication according to at least one of lighting control standards, digital building infrastructure or home automation standards, personal wireless area network (WPAN) standards according to IEEE 802.15.4, wireless local area network (WLAN) standards according to IEEE 802.11, and data communication using visible light communication (VLC).

The lighting control standards may include digital addressable lighting interface standards DALI®, DALI-2®, D4i®.

The digital building infrastructure or home automation standards may include, e.g. Zigbee®.

The personal wireless area network (WPAN) standards may include standards according to IEEE 802.15.4, e.g. Bluetooth® and Bluetooth® low energy (Bluetooth® LE).

The wireless local area network (WLAN) standards may include any standard according to IEEE 802.11, e.g. Wi-Fi®.

Fig. 2 shows a simplified overview illustrating the operational modes and switching processes between the operational modes when operating a luminaire 2 according to an embodiment.

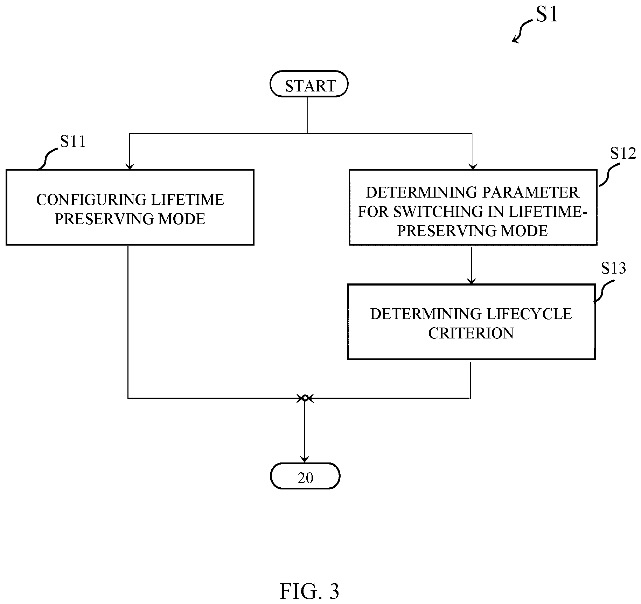

The most relevant of the individual processes S1 to S9 depicted in fig. 2 are discussed with reference to the simplified flowcharts of figs. 3 to 5 in more detail.

The control circuit 5 controls the light driver 3 and the luminaire 2 to operate in one selected operational mode out of a plurality of operational modes. The available operational modes include at least the standby mode 20, the power-supplying mode 21, and at least one lifetime-preserving mode 22.

In particular, the converter circuit 6 generates and outputs the load current $I_{LOAD}$ based on the selected mode of the available operational modes.

After starting the light driver 3, in particular after starting the control circuit 5, the control circuit 5 controls the light driver 3 to perform a processing according to step S1 in order to switch into in the standby mode 20.

The processing sequence of step S1 will be discussed in more detail with reference to fig. 3.

In order to switch the light driver 3 from the standby mode 20 into the power-supplying mode 21, the control circuit 5 performs the processing according to step S2. The lighting driver 3 will then operate in the power-supplying mode 21, which, for the generic driver device corresponding to the light driver 3, may be referred as a lighting mode. In the lighting mode, the light driver 3 emits light 4.1 with a light intensity according to a particular dim level. The dim level in the lighting mode may be predetermined, e.g. to 100% or maybe adjustable from above 0% (excluding 0%) up to 100%.

The processing sequence of step S2 corresponds to the sequence of switching from the standby mode 20 to the power-supplying mode 21 for the generally known driver devices.

In order to switch the light driver 3 from the power-supplying mode 21 into the standby mode 20, the control circuit 5 performs the processing according to step S3.

The processing sequence of step S2 corresponds to the sequence of switching from the power-supplying mode 21 to the standby mode 20 for the generally known driver devices.

After performing the processing of step S3, the control circuit 5 operates the light driver 3 in the standby mode 20.

The processing of steps S2 and S3 may include specific means to reduce the impact of the variation of the output power of the light driver 3 distinct from the method of controlling the at least one light driver 3 according the embodiment. The processing of steps S2 and S3 may restrict a velocity of the output power variation to a maximum velocity, independent from the absolute size of the output power variation, for example. Limiting the velocity of the output power variation to the maximum velocity may apply in step S2 and/or S3 to cases, in which the absolute value of the output power variation exceeds a predetermined threshold.

The method according to the embodiment differs therefrom by including the at least one lifetime-preserving mode 22. The control circuit 5 may perform the processing according to step S6 in order to switch the light driver 3 from the standby mode 20 into the lifetime-preserving mode 22. Alternatively, in case the light driver 3 is operating in the power-supplying mode 21, the control circuit 5 performs the processing of step S6 in order to switch the light driver 3 from the power-supplying mode 21 into the lifetime-preserving mode 22.

The processing step S6 may not necessarily implemented in any embodiment of the control circuit 5. At least the sequence of processing sequence of step S4, and the processing sequence of a step S5 introduced below distinguishes the method illustrated by fig. 2 over the known approaches.

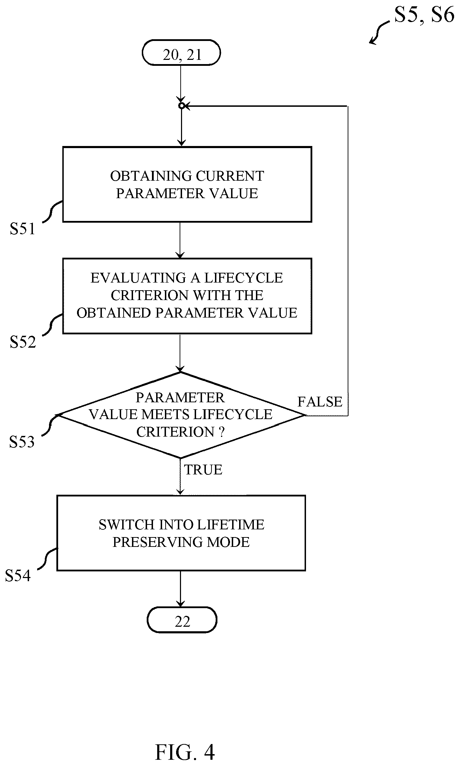

The processing sequence of steps S5 and S6 will be discussed in more detail with reference to fig. 4. After performing one of steps S5, S6, the control circuit 5 controls the light driver 3 to operate in the lifetime-preserving mode 22.

In the lifetime-preserving mode 22, the adjustable value of at least one operational parameter of the at least one light driver 3 differs from the standby mode 20. In particular, a dim level of the light 4.1 output by the light driver 3 in the lifetime-preserving mode may differ from the dim level in the standby mode 20, which always has the light driver 3 operating with the dim level of 0 or 0%, corresponding to a load current $I_{LED}$ of 0 A.

In case the light driver 3 operates in the lifetime-preserving mode 22, the control circuit 5 may perform the processing sequence of step S4 in order to switch the light driver 3 from the lifetime-preserving mode 22 into the power-supplying mode 21.

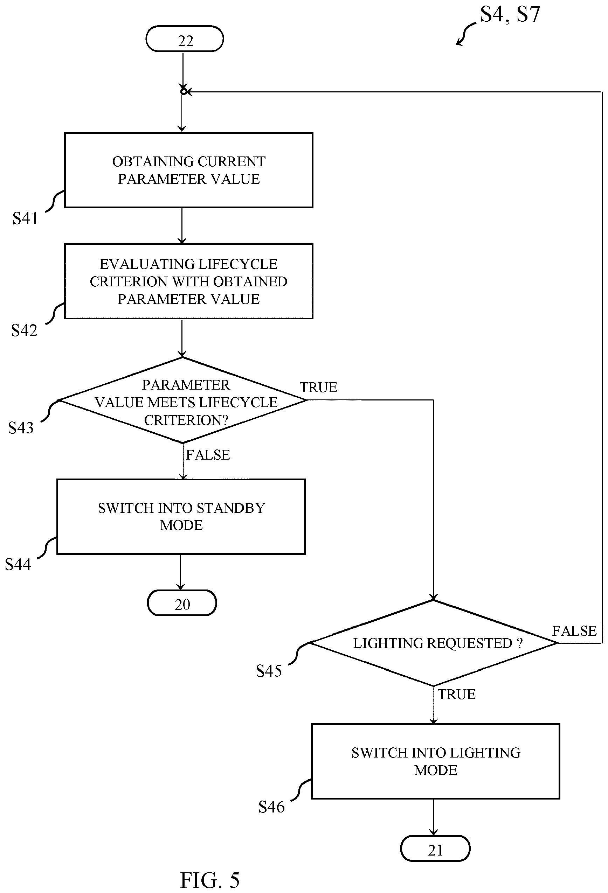

Fig. 5 displays the processing sequence of step S4 in simplified flowchart. In case the light driver 3 operates in the lifetime-preserving mode 22, the control circuit 5 may alternatively perform the processing sequence of step S7 in order to switch the light driver 3 from the lifetime-preserving mode 22 into the standby mode 21, the flowchart of fig. 5 also illustrates the processing sequence of step S7.

When operating the light driver 3 in the standby mode 20, the control circuit 5 may perform processing according to step S8 in order to switch the light driver 3 off.

When operating the light driver 3 in the lifetime preserving mode 22, the control circuit 5 may perform processing according to step S9 in order to switch the light driver 3 off.

After performing the steps S8 or S9, the light driver 3 is in an off-state. In the off-state, the light driver 3 may be installed or de-installed in the field. When in the off-state, the control circuit 5 performs the processing sequence of step S1 to switch the light driver into the standby state 20 again.

Fig. 3 shows a simplified flowchart illustrating method steps for operating the light driver 3, or the luminaire 2 according to an embodiment, in particular the processing sequence of step S1 for initializing the lifetime-preserving mode 22 for switching the light driver 3 into the standby mode 20.

Step 1 may include two (sub-) processes S11 and S12, which the control circuit 5 may perform sequentially or in parallel.

In process S11, the control circuit 5 configures the lifetime-preserving mode 22.

In processes S12 and S13, the control circuit 5 configures the switchover processing from the power-supplying mode 21 into the lifetime-preserving mode 22, and the switchover processing from the standby mode 20 into the lifetime-preserving mode 22.

In process S11, the control circuit 5 in particular determines the adjustable value of at least one operational parameter of the at least one lighting driver 3 (driver device) while operating in the lifetime-preserving mode 22 that differs from the respective value of the adjustable parameter in the standby mode 20.

The at least one adjustable value of the operational parameter may include the dim level value or a value range of the dim level for the light driver device 3 in the lifetime-preserving mode 22. In particular, in the lifetime-preserving mode 22, the at least one light driver 3 is configured to provide power via outputting the load current $I_{LED}$ to the light module 4 at a second dimming level lower than a first dimming level in the power-supplying mode 21.

In process S12, the control circuit 512 configures the switchover processing from the power-supplying mode 21 into the lifetime-preserving mode 22, and the switchover processing from the standby mode 20 into the lifetime-preserving mode 22, by determining the parameter for determining whether to switch into the lifetime-preserving mode 22.

Obtaining a parameter value will enable during operation of the light driver 3 to control the timing of initiation of a switchover to the lifetime-preserving mode 22.

In process S13, the control circuit 512 configures the switchover processing from the power-supplying mode 21 into the lifetime-preserving mode 22, and the switchover processing from the standby mode 20 into the lifetime-preserving mode 22, by determining the lifecycle criterion.

Evaluating the obtained parameter value to determine whether the obtained parameter value meets the lifecycle-criterion will enable during operation of the light driver 3 to control whether to initiate switchover to the lifetime-preserving mode 22.

The processing in steps S5 or S6 includes switching the at least one light driver 3 into the lifetime-preserving mode 22 instead of switching process S3 into the standby mode 20 in case an obtained parameter value meets a the lifecycle criterion.

The obtained parameter value comprises a current time, and the lifecycle criterion includes determining whether the current time is within a period with a predicted increased switching frequency of the driver device switching between the power-supplying mode 21 and the standby mode 20.

The term period denotes a time interval or period of time.

Steps S12 and S13 may include obtaining data on an event, and determining the period based on the obtained data on the event. The obtained data on the event may include information on switching the driver device between the standby mode 20 and the power-supplying mode 21 related to the event.

Thus, the control circuit 5 may identify that a specific event, e.g. a public sports event, involves frequent switchover processes between the standby mode 20 and the lighting mode (power-supplying mode 21) in a parking venue near the sport stadium. Recognizing this interdependency, the control circuit 5 may determine the lifecycle criterion insofar, that for certain periods around a scheduled sports event the control circuit 5 controls the light drivers 3 and luminaires 2 of the lighting system 1 illuminating the parking venue near the sports stadium in the lifetime-preserving mode 22.

For the obtained parameter value comprising a current time and data on an event, the lifecycle criterion may include generating, or at least adapting, the period based on obtained data on the event. The determined lifecycle criterion includes determining whether the current time is within the adapted period with a predicted increased switching frequency of the driver device switching between the power-supplying mode 21 and the standby mode 20.

Additionally or alternatively, the step S1 may include determining the period based on historic data on changeover events between the standby mode 20 and the power-supplying mode for a predetermined period in the past.

Additionally or alternatively, the step S1 may include determining the period based on historic data on the changeover between the standby mode 20 and the power-supplying mode 21 for a predetermined lifecycle criterion based on a count of changeover events between the standby mode 20 and the power-supplying mode 21 during a predetermined time interval.

Counting the changeover events may be performed by directly counting the changeover events in the historic data.

Alternatively, counting the changeover events may include counting changeover events indirectly, for example by applying a counting method on a temperature profile of the device temperature acquired for the predetermined time interval.

As specific counting method applied on the temperature profile may base on the rainflow-counting method that provides a scheme how to count a number of cycles in an acquired profile of a physical quantity over time. The physical quantity corresponds to the temperature profile in current example.

Particular and known implementations of the rainflow-counting method, include, e.g., the four-point method or the pagoda-roof method.

The input for the rainflow-counting method is the temperature profile. Running the rainflow-counting method on the obtained temperature profile provides a histogram-type distribution of counting values of occurrences of temperature cycles with a particular temperature spread as output. The output may define for individual temperature spreads a count of occurrences of the temperature spread in the acquired temperature profile provided as input. The result provided by running the rainflow-counting method for present example may define a representative number of temperature cycles for the lifetime of the electric circuit.

An x-axis of the output data generated by the rainflow-counting method may display the temperature amplitude (temperature spread, temperature spread ranges), the y-axis may show a counted number of occurrences of the temperature amplitude in the input temperature profile.

A temperature spread of 100 °C may indicate an increased significance for the lifetime of an electric circuit than a temperature spread of 10 °C. The method may use representative temperature cycles, as not all temperature cycles are actually counted, but the counted number is the number of occurrence of the temperature cycles with significance for the lifetime of the electronic circuit due to their temperature spread and their duration.

In present case, an evaluation of the histogram provided by performing the rainflow-counting method on historic data may provide a count number for representative temperature cycles for a temperature spread of the light driver 3 for determining the lifecycle criterion. For example, the lifecycle criterion may use a predetermined life expectancy in terms of number of representative temperature cycles of the at least one light driver 3.

The lifecycle criterion may further use a determined count value of the number of representative temperature cycles of the light driver 3 to predict a remaining life expectancy of the light driver 3 based on the predetermined life expectancy and the determined count value of the number of representative temperature cycles of the light driver 3.

Additionally, the lifecycle criterion may include providing a control interface to the user, for example using a human machine interface 16 (HMI 16), and, the user may instruct the control device 3 to switch the light driver into the lifetime preserving mode 22 manually via the control interface.

Fig. 4 shows a simplified flowchart illustrating method steps for operating the luminaire 2 according to an embodiment, in particular processing steps for switching the light driver 3 into the lifetime-preserving mode 22.

The method steps S51 to S54 depicted in fig. 4 are included in both the processing of step S5 for the switching from the standby mode 20 into the lifetime-preserving mode 22 and the processing of step S6 for switching from the power-supplying mode 21 into the lifetime-preserving mode 22.

In step S51, the control circuit 5 obtains the current parameter value for the parameter determined in step S12.

The obtained parameter value may include a count of changeover events between the standby mode 20 and the power-supplying mode 21 during a predetermined time interval.

The obtained parameter value may include a count of temperature cycles in a temperature profile of a temperature of the driver device during a predetermined time interval. Obtaining the parameter value may include applying a cycle-counting algorithm, in particular a rainflow-counting method, on the temperature profile.

In step S52, the control circuit 5 evaluates the lifecycle criterion determined in step S12 with the obtained current parameter value from step S51.

In particular, in step S52, the control circuit 5 may compare the obtained current parameter value with the lifecycle criterion. The control circuit 5 compares the obtained current time with a period defined in the lifecycle criterion.

Evaluating the obtained parameter value may include evaluating the count of changeover events or the count of temperature cycles based on a predetermined life expectancy of the at least one driver device and/or a predicted remaining life expectancy of the at least one driver device.

Evaluating the count of changeover events or the count of temperature cycles may include comparing the count of changeover events or the count of temperature cycles with a predetermined maximum number of changeover events for the driver device.

If the method determines in step S53 that evaluating the lifecycle criterion with the obtained parameter value in step S52 yields the result that the obtained current parameter value does not meet the lifecycle criterion ("FALSE"), the method returns to step S51.

In this case ("FALSE"), the control circuit 5 decides that the current operational mode of the light driver 3 is to be maintained, e.g. if the control circuit 5 controls the light driver 3 operating in the standby mode 20, the control circuit 5 continues controlling the light driver 3 operating in the standby mode 20. If the control circuit 5 currently controls the light driver 3 operating in the power-supplying mode 21, the control circuit 5 continues controlling the light driver 3 operating in the power-supplying mode 21.

If the method determines in step S53 that evaluating the lifecycle criterion with the obtained parameter value in step S52 yields the result that the obtained current parameter value meets the lifecycle criterion ("TRUE"), the method proceeds with step S54.

In step S54, the control circuit 5 switches the operational mode of the light driver 3 to operating in the lifetime-preserving mode 22. The control circuit 5 subsequently proceeds by controlling the light driver 3 operating in the lifetime-preserving mode 22.

Fig. 5 shows a simplified flowchart illustrating method steps for operating the luminaire 2 according to an embodiment, in particular steps of operating the luminaire 2 in the lifetime-preserving mode 22.

In step S41, the control circuit 5 obtains the current parameter value for the parameter determined in step S12.

In step S42, the control circuit 5 evaluates the lifecycle criterion determined in step S12 with the obtained current parameter value from step S41. In particular, in step S42, the control circuit 5 may compare the obtained current parameter value with the lifecycle criterion.

If the method determines in step S43 succeeding to step S42 that evaluating the lifecycle criterion with the obtained parameter value in step S42 yields the result that the obtained current parameter value does not meet the lifecycle criterion ("FALSE"), the method proceeds to step S44.

In step S44, the control circuit 5 switches the operational mode of the light driver 3 to operating in the standby mode 20. The control circuit 5 proceeds by controlling the light driver 3 operating in the standby mode 20.

If the method determines in step S43 that evaluating the lifecycle criterion with the obtained current parameter value in step S42 yields the result that the obtained current parameter value does meet the lifecycle criterion ("TRUE"), the method proceeds with step S45.

In step S45, the control circuit 5 determines whether operating the light driver 3 in the power-supplying mode is requested. If the control circuit 5 determines in step S43 that evaluating the lifecycle criterion with the obtained current parameter value in step S42 yields the result that operating in the power-supplying mode 21 is requested ("TRUE"), the method proceeds to step S46. In step S46, the control circuit 5 switches to controlling the light driver 3 in the power-supplying mode 21 and proceeds with controlling the light driver 3 in the power-supplying mode 21.

If the control circuit 5 determines in step S43 that evaluating the lifecycle criterion with the obtained current parameter value in step S42 yields the result that operating in the power-supplying mode 21 is not requested ("FALSE"), the method returns to step S41. In particular, the control circuit 5 maintains the operational mode of controlling the light driver 3 in the lifetime-preserving mode 22 and proceeds with controlling the light driver 3 in the lifetime-preserving mode 22.

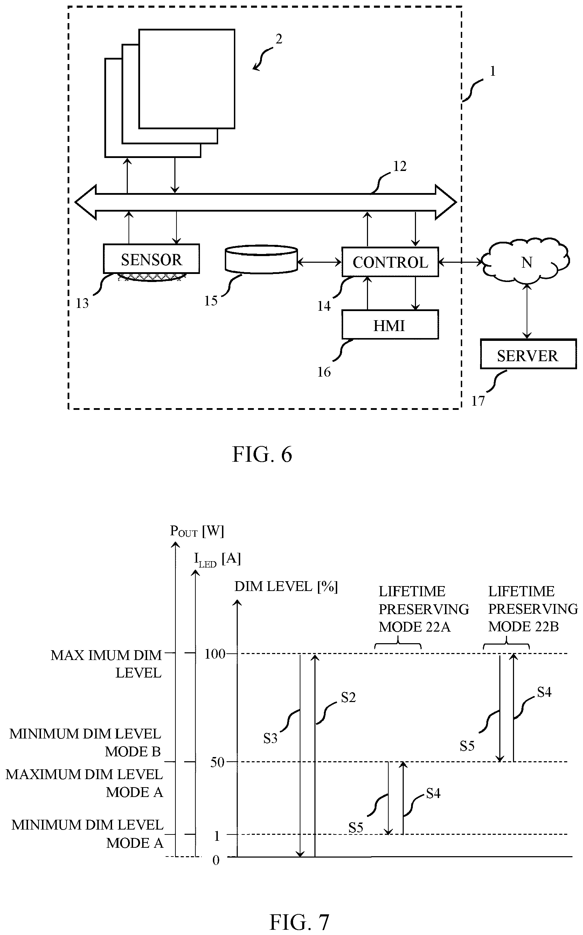

Fig. 6 illustrates the general structure and major elements of the lighting system 1.

The lighting system 1 is depicted with its components connected via the communication bus 12, the components including a plurality of luminaires 2, at least one sensor 13, and a light control device 14.

The lighting system 1 may be applied to illuminate an indoor spaces, for example a building, a car park, or an outdoor areas including examples such as parking areas, walking spaces, train stations and a road network.

The light control device 14 may include or connect to a data storage 15. The light control device 14 may include or connect to the human machine interface (HMI) 16.

The HMI 16 may enable to tailor a preset values for the adjustable parameter value of the at least one adjustable parameter to specific requirements in a particular application of a specific user. For example, the dim level and the corresponding output power provided by the light driver 3 influences an overall energy consumption of the lighting system 1 over time, as the time the light drivers 3 operate in the standby mode 20 are reduced in favour of the time the light drivers 3 operate in the added lifetime-preserving mode 22 instead. The standby mode 20 has the lowest energy consumption of the three operational modes. An increase in energy consumption for the lighting system 1 implementing an operation in the three operational modes - standby mode 20, power-supplying mode 21, and lifetime-preserving mode 22 - may therefore anticipated compared with operating the lighting system 1 exclusively in the standby mode 20 and the power-supplying mode 21. This disadvantage has to be considered in relation to expected reduced equipment cost due to longer service life of the light drivers 3 in the long term. Each applicant may therefore perform a final configuration of the lifecycle criterion via the HMI 16 on site, and adapt an existing configuration to changed energy and equipment cost or user preferences via the HMI.

The light control device 14 may be connected to an external network N, and via the external network N to at least one external server 17. The external network N may include a local area network (LAN), e.g. a LAN installed in building, or for an organisational entity such as a company or an office, or a wide area network (WAN), in particular the world wide net.

The external server 17 may include servers related to services including building management, event organisation, transport organisation, and traffic management.

The external server 17 may provide information on a specific event to the control device 14.

Specific examples for events may include public events, e.g. a concert, a town hall meeting, a conference, and an assembly, and a sports event.

Information on specific events may include event-related parameters for at least one of an event type, a calendar date of the event, an event start time, an event end time, an event duration, a number of participating persons related to the event, a number of vehicles and vehicle types associated with the participating persons.

The specific event may be a scheduled arrival of a means for transport such as a train, a bus, a ship or an aircraft. The specific event may be an updated time of arrival of such means for transport

The information on the event may include at least one of planned instances of the event-related parameters, predicted instances of the event-related parameters, actual instances of the event-related parameters, and updated instances of the event-related parameters.

Additionally or alternatively, the external server 17 may include a calendar server for providing calendar information including information on working days, public holidays, and school holidays.

Additionally or alternatively, the external server 17 may include a weather server for providing weather forecast information and current weather information.

Additionally or alternatively, the external server 17 may include a product information server storing a database for providing product-related technical information. The product-related information may include data on the number of temperature cycles for at least one predetermined temperature spread a driver device (light driver 3) of a particular type can withstand.

The product information server may be server of a supplier or a manufacturer. The database may include product-related information that may include predicted data from simulation, data generated during a design process of driver devices, and data generated by testing or data acquired from operation of the driver devices in the field.

The light control device 14 may include a control circuit 15 implementing the functions of the method for operating at least one driver device, e.g. for operating at least one light driver 3. In this embodiment, the communication bus 12 provides communication between the light control device 14 and the at least one light driver 3.

Additionally or alternatively, the light control device 14 may include a lighting control server, which provides control signals to the plurality of luminaires 2 of the lighting system 1 shown in fig. 6. The control circuits 5 of the individual luminaires 2 implement then the functions of the method for operating at least one driver device, e.g. for operating the light driver 3 not only in the standby mode 20 and the power-supply mode 21, but also in the at least one lifetime-preserving mode 22.

The at least one sensor 13 may include at least one or a combination of sensors 13, e.g. including a presence sensor (presence detecting sensor) and/or an ambient light level sensor.

The lighting system 1 may further include further light control elements including but limited to at least one of a push switch, an on/off-switch, and a dimmer. The light control elements may be part of at least some of the luminaires 2. Additionally or alternatively, the light control elements may include bus interfaces for directly connecting the light control interfaces to the communication bus 12.

The communication bus 12 may be a bus implementing any of the standards discussed with reference to the communication bus 12 of the luminaire 2. For example, the communication bus 12 of the lighting system 1 may implement lighting control according to the lighting standards DALI®, DALI-2®, or D4i®.

Fig. 7 illustrates for an exemplary embodiment the advantageous effects of the lifetime preserving mode 22 when compared with the operating the light driver 3 switching between the power-supplying mode 21 and the standby mode 20 applying a known control scheme the light driver 3 according to prior art.

The simplified control scheme for the known light driver switches the light driver between operating in the standby mode 20 with a dim level value of 0 (0%) and the power-supplying mode 21, actually a lighting-mode 21, with a dim level value of 1.0 (100%). The high variation in dim level between the standby mode 20 and the lighting mode 21, the load current $I_{LOAD}$ and the output power $P_{OUT}$ provided by the light driver 3 will vary respectively by a considerable amount for each switching of the light driver 3 between the standby mode 20 and the lighting mode 21. The light driver 3 will be exposed to a respective large temperature spread during each switching cycle between the standby mode 20 and the lighting mode 21. This situation forms the basis for the left portion of fig. 7.

The centre portion and the right portion of fig. 7 depict the situation for an embodiment of the method for controlling the light driver 3. The centre portion and the right portion of fig. 7 assume that evaluation of the obtained parameter value with the lifecycle criterion provides the result that the obtained parameter value meets the lifecycle criterion, and switching the light driver 3 into the lifetime-preserving mode 22 has been performed.

In the example of fig. 7, when controlling the light driver device 3 in the lifetime-preserving mode 22, switching of the light driver 3 to the standby mode 20 is inhibited.

In the example of fig. 7, the control circuit 5 may operate in a lifetime preserving mode A or in a lifetime preserving mode B.

The lifetime-preserving mode 22A illustrated in the centre portion of fig. 7 assumes a dim level range for an output of the light driver 3 is set with a minimum lower dim level of 0.01 (1%) and a maximum dim level in the lifetime-preserving mode 22 of 0.5 (50%).

The lifetime-preserving mode 22B illustrated in the right portion of fig. 7 assumes a dim level range for an output of the light driver 3 is set with a minimum lower dim level of 0.5 (50%) and a maximum dim level in the lifetime-preserving mode 22 of 1.0 (100%).

A reduced dim level variation for both the lifetime preserving mode 22A and 22B will result in a reduced temperature spread during operation in the lifetime preserving mode 22A, 22B when compared with the known control scheme.

Fig. 7 illustrates that the reduced temperature spread achieving the benefit of an increased service life of the light driver 3 involves avoiding switching into the standby mode 20, and thus may result in an increase in energy consumption. This might at least in part mitigated in the lifetime-preserving mode 22A by operating at generally lower dim levels when compared to lifetime-preserving mode B. On the other hand, the lifetime-preserving mode 22B offers the functional advantage of emitting light 4.1 with a dim level of 1 (100%). The design of the lifetime-preserving mode 22B, the selected value or value range of the operational parameter, its adjustable value may thus be adapted to the application scenario of the light driver 3, luminaire 2 and lighting system1.

Additionally or alternatively, the control circuit 5 may implement plural lifetime-preserving modes 22 with respectively differing parameter values and/or value ranges of the at least one operational parameter. A selected lifetime-preserving mode 22 for controlling the light driver 3 may be selectable based on further criteria, e.g. functional criteria such as a required light intensity, or economic criteria, e.g. a tolerable increase in power consumption.

The example illustrates that operating in the lifetime-preserving mode 22 provides the effect of a reduced temperature spread due to a reduced variation in load current $I_{LED}$ respective a reduced variation of the output power $P_{OUT}$ when applying the known control scheme of the left portion. In the known control scheme depicted in the left portion of fig. 7, the switching processes S3 and S2 for switching between the power-supplying mode 21 and the standby mode 20 indicate a large temperature spread due to switching processes between the standby mode 20 and the power-supplying mode 21.

**Claims**

1.  Method for controlling at least one driver device, in particular a light driver (3), the method controlling the at least one driver device to operate either in a standby mode (20) or in a power-supplying mode (21), and the method comprises

    obtaining (S51) a parameter value,
    evaluating (S52) the obtained parameter value to determine whether the obtained parameter value meets a lifecycle-criterion,
    switching (S5, S6, S52) the at least one driver device to a lifetime-preserving mode (22) in case the obtained parameter value meets the lifecycle criterion,
    wherein, in the lifetime-preserving mode (22), an adjustable value of at least one operational parameter of the at least one driver device is set to reduce a temperature spread of a device temperature of the at least one driver device, and
    **characterized in**
    **that** the obtained parameter value comprises a current time, and
    evaluating the obtained parameter value (S52) includes determining whether the current time is within a period with a predicted increased frequency of the driver device switching between the power-supplying mode (21) and the standby mode (20).

2.  Method according to claim 1, wherein the method comprises

    obtaining data on an event, and
    determining the period based on the obtained data on the event,
    wherein the obtained data on the event includes information on switching the driver device between the standby mode (20) and the power-supplying mode (21) related to the event.

3.  Method according to claim 2, wherein the method comprises
    determining the period includes adapting the period based on obtained historic data on switching the driver device between the standby mode (20) and the power-supplying mode (21).

4.  Method according to one of the preceding claims, wherein

the obtained parameter value includes a count of changeover events between the standby mode (20) and the power-supplying mode (21) during a predetermined time interval.

**5.** Method according to one of claims 1 to 3, wherein
the obtained parameter value includes a count of temperature cycles in a temperature profile of a temperature of the driver device during a predetermined time interval.

**6.** Method according to claim 5, wherein
obtaining the parameter value by applying a cycle-counting algorithm, in particular a rainflow-counting method, on the temperature profile.

**7.** Method according to one of claims 4 to 6, wherein
evaluating the obtained parameter value includes evaluating the count of changeover events or the count of temperature cycles based on a predetermined life expectancy of the at least one driver device and/or a predicted remaining life expectancy of the at least one driver device.

**8.** Method according to one of claims 4 to 7, wherein
evaluating the count of changeover events or the count of temperature cycles includes comparing the count of changeover events or the count of temperature cycles with a predetermined maximum number of changeover events for the at least one driver device.

**9.** Method according to one of the preceding claims, wherein
in the lifetime-preserving mode (22), switching (S3) the driver device into the standby mode (20) is inhibited.

**10.** Method according to claim 9, wherein

the at least one operational parameter includes a dim level for an output power or for a load current ($I_{LED}$) provided by the at least one driver device, and
in the lifetime preserving mode (22), a minimum dim level of the at least one driver device is set to a value larger than 0, in particular the minimum dim level threshold is set to 0.5 in a dim level range from 0 to 1.

**11.** Method according to claim 10, wherein

the at least one operational parameter includes a dim level for an output power or for a load current ($I_{LED}$) provided by the at least one driver device, and
in the lifetime preserving mode (22), a dim level range for the dim level is set with a minimum dim level and a maximum dim level,
wherein the minimum dim level is set to a value larger than 0 and the maximum dim level is set to value smaller than 1 in a dim level range from 0 to 1, in particular the minimum dim level is set to 0.1, and the maximum dim level is set to 0.5.

**12.** Control circuit for controlling at least one driver device, in particular a light driver (3), the control circuit configured to control the driver device to operate in a standby mode (20) or a power-supplying mode (21), and

the control circuit is configured to obtain a parameter value,

to evaluate the obtained parameter value to determine whether the obtained parameter value meets a lifecycle-criterion, and
to switch (S5, S6) the at least one driver device into a lifetime-preserving mode (22) in case the obtained parameter value meets the lifecycle criterion, and

the control circuit is configured, in the lifetime-preserving mode (22), to adjust a value of at least one operational parameter of the at least one driver device to reduce a temperature spread of a device temperature of the at least one driver device, and
**characterized in**

**that** the obtained parameter value comprises a current time, and
the control circuit is configured to evaluate the obtained parameter value (S52) including determining whether the current time is within a period with a predicted increased frequency of the driver device switching between the power-supplying mode (21) and the standby mode (20).

13. Driver device, in particular a light driver (3), which comprises at least one converter circuit (6) configured to provide a supply current to a load, in particular to at least one light module (4), and a control circuit (5) according to claim 12 configured to control the at least one converter circuit (6).

14. Luminaire, in particular an outdoor luminaire, comprising at least one light module (4), and at least one driver device according to claim 13 for supplying a load current ($I_{LED}$) to the at least one light module (4).

15. Lighting system including at least one luminaire (2) according to claim 14.

**Patentansprüche**

1. Verfahren zum Steuern von mindestens einer Treibervorrichtung, insbesondere einem Lichttreiber (3), wobei das Verfahren die mindestens eine Treibervorrichtung steuert, um entweder in einem Standby-Modus (20) oder in einem Leistungsversorgungsmodus (21) betrieben zu werden, und das Verfahren umfasst

Erhalten (S51) eines Parameterwerts,
Auswerten (S52) des erhaltenen Parameterwerts, um zu bestimmen, ob der erhaltene Parameterwert ein Lebensdauerkriterium erfüllt,
Schalten (S5, S6, S52) der mindestens einen Treibervorrichtung in einen lebensdauerbewahrenden Modus (22), falls der erhaltene Parameterwert das Lebensdauerkriterium erfüllt,
wobei, in dem Lebensdauererhaltungsmodus (22), ein anpassbarer Wert von mindestens einem Betriebsparameter der mindestens einen Treibervorrichtung eingestellt wird, um eine Temperaturspanne einer Vorrichtungstemperatur der mindestens einen Treibervorrichtung zu verringern, und
**dadurch gekennzeichnet,**
**dass** der erhaltene Parameterwert eine aktuelle Zeit umfasst, und
das Auswerten des erhaltenen Parameterwerts (S52) das Bestimmen einschließt, ob die aktuelle Zeit innerhalb eines Zeitraums mit einer vorhergesagten erhöhten Häufigkeit des Schaltens der Treibervorrichtung zwischen dem Leistungsversorgungsmodus (21) und dem Standby-Modus (20) liegt.

2. Verfahren nach Anspruch 1, wobei das Verfahren umfasst

Erhalten von Daten zu einem Ereignis, und
Bestimmen des Zeitraums basierend auf den erhaltenen Daten zu dem Ereignis,
wobei die erhaltenen Daten zu dem Ereignis Informationen über das Schalten der Treibervorrichtung zwischen dem Standby-Modus (20) und dem Leistungsversorgungsmodus (21) in Bezug auf das Ereignis einschließen.

3. Verfahren nach Anspruch 2, wobei das Verfahren umfasst
Bestimmen des Zeitraums, der ein Anpassen des Zeitraums basierend auf erhaltenen historischen Daten zum Schalten der Treibervorrichtung zwischen dem Standby-Modus (20) und dem Leistungsversorgungsmodus (21) einschließt.

4. Verfahren nach einem der vorstehenden Ansprüche, wobei
der erhaltene Parameterwert eine Anzahl von Umschaltereignissen zwischen dem Standby-Modus (20) und dem Leistungsversorgungsmodus (21) während eines zuvor bestimmten Zeitintervalls einschließt.

5. Verfahren nach einem der Ansprüche 1 bis 3, wobei
der erhaltene Parameterwert eine Anzahl von Temperaturzyklen in einem Temperaturprofil einer Temperatur der Treibervorrichtung während eines zuvor bestimmten Zeitintervalls einschließt.

6. Verfahren nach Anspruch 5, wobei
Erhalten des Parameterwertes durch Anwenden eines Zykluszählalgorithmus, insbesondere eines Rainflow-Zählverfahrens, auf das Temperaturprofil.

7. Verfahren nach einem der Ansprüche 4 bis 6, wobei

Auswerten des erhaltenen Parameterwerts das Auswerten der Anzahl von Umschaltereignissen oder der Anzahl von Temperaturzyklen basierend auf einer zuvor bestimmten Lebenserwartung der mindestens einen Treibervorrichtung und/oder einer vorhergesehenen verbleibenden Lebenserwartung der mindestens einen Treibervorrichtung einschließt.

8. Verfahren nach einem der Ansprüche 4 bis 7, wobei
Auswerten der Anzahl von Umschaltereignissen oder der Anzahl von Temperaturzyklen ein Vergleichen der Anzahl von Umschaltereignissen oder der Anzahl der Temperaturzyklen mit einer zuvor bestimmten maximalen Nummer von Umschaltereignissen für die mindestens eine Treibervorrichtung einschließt.

9. Verfahren nach einem der vorstehenden Ansprüche, wobei
in dem Lebensdauererhaltungsmodus (22), das Schalten (S3) der Treibervorrichtung in den Standby-Modus (20) verhindert wird.

10. Verfahren nach Anspruch 9, wobei

der mindestens eine Betriebsparameter einen Dimmpegel für eine Ausgangsleistung oder für einen Laststrom ($I_{LED}$) einschließt, die durch die mindestens eine Treibervorrichtung bereitgestellt wird, und
in dem Lebensdauererhaltungsmodus (22) ein minimaler Dimmpegel der mindestens einen Treibervorrichtung auf einen Wert eingestellt wird, der größer als 0 ist, insbesondere der minimale Dimmpegelschwellenwert auf 0,5 in einem Dimmpegelbereich in einem Bereich von 0 bis 1 eingestellt wird.

11. Verfahren nach Anspruch 10, wobei

der mindestens eine Betriebsparameter einen Dimmpegel für eine Ausgangsleistung oder für einen Laststrom ($I_{LED}$) einschließt, die durch die mindestens eine Treibervorrichtung bereitgestellt wird, und
in dem Lebensdauererhaltungsmodus (22), ein Dimmpegelbereich für den Dimmpegel mit einen minimalen Dimmpegel und einem maximalen Dimmpegel eingestellt wird,
wobei der minimale Dimmpegel auf einen Wert eingestellt wird, der größer als 0 ist, und der maximale Dimmpegel auf einen Wert eingestellt wird, der kleiner als 1 in einem Dimmpegelbereich von 0 bis 1 ist, wobei insbesondere der minimale Dimmpegelauf 0,1 eingestellt wird und der maximale Dimmpegel auf 0,5 eingestellt wird.

12. Steuerschaltung zum Steuern von mindestens einer Treibervorrichtung, insbesondere eines Lichttreibers (3), wobei die Steuerschaltung konfiguriert ist, zum

Steuern der Treibervorrichtung, um in einem Standby-Modus (20) oder einem Leistungsversorgungsmodus (21) betrieben zu werden, und wobei die Steuerschaltung konfiguriert ist, um einen Parameterwert zu erhalten, um den erhaltenen Parameterwert zu bewerten, um zu bestimmen, ob der erhaltene Parameterwert ein Lebensdauerkriterium erfüllt, und
um die mindestens eine Treibervorrichtung in einen lebensdauerbewahrenden Modus (22) zu schalten (S5, S6), falls der erhaltene Parameterwert das Lebensdauerkriterium erfüllt, und die Steuerschaltung in dem lebensdauerbewahrenden Modus (22) konfiguriert ist, um einen Wert von mindestens einem Betriebsparameter der mindestens einen Treibervorrichtung anzupassen, um eine Temperaturspanne einer Vorrichtungstemperatur der mindestens einen Treibervorrichtung zu verringern, und **dadurch gekennzeichnet, dass** der erhaltene Parameterwert eine aktuelle Zeit umfasst, und
die Steuerschaltung konfiguriert ist, um den erhaltenen Parameterwert auszuwerten (S52), der das Bestimmen einschließt, ob die aktuelle Zeit innerhalb eines Zeitraums mit einer vorhergesagten erhöhten Häufigkeit des Schaltens der Treibervorrichtung zwischen dem Leistungsversorgungsmodus (21) und dem Standby-Modus (20) liegt.

13. Treibervorrichtung, insbesondere einen Lichttreiber (3), die mindestens eine Wandlerschaltung (6), die konfiguriert ist, um einen Versorgungsstrom an eine Last bereitzustellen, insbesondere an mindestens ein Lichtmodul (4), und eine Steuerschaltung (5) nach Anspruch 12 umfasst, die konfiguriert ist, um die mindestens eine Wandlerschaltung (6) zu steuern.

14. Leuchte, insbesondere eine Außenleuchte, umfassend mindestens ein Lichtmodul (4) und mindestens eine Treibervorrichtung nach Anspruch 13 zum Vorsorgen eines Laststroms (ILEDI zu dem mindestens einen Lichtmodul (4).

**15.** Beleuchtungssystem, das mindestens eine Leuchte (2) nach Anspruch 14 einschließt.

**Revendications**

**1.** Procédé permettant de commander au moins un dispositif pilote, en particulier un pilote de lumière (3), le procédé commandant l'au moins un dispositif pilote pour qu'il fonctionne soit dans un mode veille (20), soit dans un mode d'alimentation électrique (21), et le procédé comprend

l'obtention (S51) d'une valeur de paramètre,
l'évaluation (S52) de la valeur de paramètre obtenue pour déterminer si la valeur de paramètre obtenue satisfait à un critère de cycle de vie,
la commutation (S5, S6, S52) de l'au moins un dispositif pilote sur un mode de préservation de la durée de vie (22) dans le cas où la valeur de paramètre obtenue satisfait au critère de cycle de vie,
dans lequel, dans le mode de préservation de la durée de vie (22), une valeur ajustable d'au moins un paramètre opérationnel de l'au moins un dispositif pilote est réglée pour réduire une dispersion de température d'une température de dispositif de l'au moins un dispositif pilote, et
**caractérisé en ce que**
la valeur de paramètre obtenue comprend une heure actuelle, et
l'évaluation de la valeur de paramètre obtenue (S52) comporte le fait de déterminer si l'heure actuelle se situe dans une période avec une fréquence accrue prévue de commutation par le dispositif pilote entre le mode d'alimentation électrique (21) et le mode veille (20).

**2.** Procédé selon la revendication 1, dans lequel le procédé comprend

l'obtention de données sur un événement, et
la détermination de la période sur la base des données obtenues sur l'événement, dans lequel les données obtenues sur l'événement comportent des informations sur la commutation du dispositif pilote entre le mode veille (20) et le mode d'alimentation électrique (21) en fonction de l'événement.

**3.** Procédé selon la revendication 2, dans lequel le procédé comprend
la détermination de la période comporte l'adaptation de la période sur la base de données historiques obtenues sur la commutation du dispositif pilote entre le mode veille (20) et le mode d'alimentation électrique (21).

**4.** Procédé selon l'une des revendications précédentes, dans lequel
la valeur de paramètre obtenue comporte un compte d'événements de transition entre le mode veille (20) et le mode d'alimentation électrique (21) pendant un intervalle de temps prédéterminé.

**5.** Procédé selon l'une des revendications 1 à 3, dans lequel
la valeur de paramètre obtenue comporte un compte de cycles de température dans un profil de température d'une température du dispositif pilote pendant un intervalle de temps prédéterminé.

**6.** Procédé selon la revendication 5, dans lequel
l'obtention de la valeur de paramètre en appliquant un algorithme de comptage de cycles, en particulier un procédé de comptage de demi-cycles, sur le profil de température.

**7.** Procédé selon l'une des revendications 4 à 6, dans lequel
l'évaluation de la valeur de paramètre obtenue comporte l'évaluation du compte d'événements de transition ou du compte de cycles de température sur la base d'une espérance de vie prédéterminée de l'au moins un dispositif pilote et/ou d'une espérance de vie restante prédite de l'au moins un dispositif pilote.

**8.** Procédé selon l'une des revendications 4 à 7, dans lequel
l'évaluation du compte d'événements de transition ou du compte de cycles de température comporte la comparaison du compte d'événements de transition ou du compte de cycles de température avec un nombre maximum prédéterminé d'événements de transition pour l'au moins un dispositif pilote.

**9.** Procédé selon l'une des revendications précédentes, dans lequel
dans le mode de préservation de la durée de vie (22), la commutation (S3) du dispositif pilote dans le mode veille (20) est inhibée.

**10.** Procédé selon la revendication 9, dans lequel

l'au moins un paramètre opérationnel comporte un niveau de gradation pour une puissance de sortie ou pour un courant de charge ($I_{DEL}$) fournis par l'au moins un dispositif pilote, et
dans le mode de préservation de la durée de vie (22), un niveau de gradation minimum de l'au moins un dispositif pilote est réglé à une valeur supérieure à 0, en particulier le seuil de niveau de gradation minimum est réglé à 0,5 dans une plage de niveau de gradation allant de 0 à 1.

**11.** Procédé selon la revendication 10, dans lequel

l'au moins un paramètre opérationnel comporte un niveau de gradation pour une puissance de sortie ou pour un courant de charge ($I_{DEL}$) fourni par l'au moins un dispositif pilote, et
dans le mode de préservation de la durée de vie (22), une plage de niveau de gradation pour le niveau de gradation est définie avec un niveau de gradation minimum et un niveau de gradation maximum,
dans lequel le niveau de gradation minimum est réglé sur une valeur supérieure à 0 et le niveau de gradation maximum est réglé sur une valeur inférieure à 1 dans une plage de niveau de gradation allant de 0 à 1, en particulier le niveau de gradation minimum est réglé sur 0,1, et le niveau de gradation maximum est réglé sur 0,5.

**12.** Circuit de commande permettant de commander au moins un dispositif pilote, en particulier un pilote de lumière (3), le circuit de commande étant configuré pour

commander le dispositif pilote pour qu'il fonctionne dans un mode veille (20) ou un mode d'alimentation électrique (21), et le circuit de commande est configuré pour obtenir une valeur de paramètre,
pour évaluer la valeur de paramètre obtenue pour déterminer si la valeur de paramètre obtenue satisfait à un critère de cycle de vie, et
pour commuter (S5, S6) l'au moins un dispositif pilote dans un mode de préservation de la durée de vie (22) dans le cas où la valeur de paramètre obtenue satisfait au critère de cycle de vie, et le circuit de commande est configuré, dans le mode de préservation de la durée de vie (22), pour ajuster une valeur d'au moins un paramètre opérationnel de l'au moins un dispositif pilote pour réduire une dispersion de température d'une température de dispositif de l'au moins un dispositif pilote, et **caractérisé en ce que**
la valeur de paramètre obtenue comprend une heure actuelle, et
le circuit de commande est configuré pour évaluer la valeur de paramètre obtenue (S52), en particulier en déterminant si l'heure actuelle se situe dans une période avec une fréquence accrue prévue de commutation par le dispositif pilote entre le mode d'alimentation électrique (21) et le mode veille (20).

**13.** Dispositif pilote, en particulier pilote de lumière (3), qui comprend au moins un circuit convertisseur (6) configuré pour fournir un courant d'alimentation à une charge, en particulier à au moins un module lumineux (4), et un circuit de commande (5) selon la revendication 12, configuré pour commander l'au moins un circuit convertisseur (6).

**14.** Luminaire, en particulier luminaire d'extérieur, comprenant au moins un module lumineux (4) et au moins un dispositif pilote selon la revendication 13 pour fournir un courant de charge ($I_{DEL}$) à l'au moins un module lumineux (4).

**15.** Système d'éclairage comportant au moins un luminaire (2) selon la revendication 14.

FIG. 1

FIG. 2

S1

START

S11

CONFIGURING LIFETIME
PRESERVING MODE

S12

DETERMINING PARAMETER
FOR SWITCHING IN LIFETIME-
PRESERVING MODE

S13

DETERMINING LIFECYCLE
CRITERION

20

FIG. 3

S5, S6

```
        ┌─────────────┐
        │   20, 21    │
        └─────────────┘
               │
               ▼
        ┌──────────────────────┐
        │  OBTAINING CURRENT   │
        │   PARAMETER VALUE    │
S51     └──────────────────────┘
               │
               ▼
        ┌──────────────────────┐
        │ EVALUATING A LIFECYCLE │
        │  CRITERION WITH THE   │
        │ OBTAINED PARAMETER VALUE │
S52     └──────────────────────┘
               │
               ▼
          ╱─────────────╲
         ╱   PARAMETER   ╲        FALSE
        ╱ VALUE MEETS LIFECYCLE ╲──────
S53     ╲   CRITERION ?  ╱
         ╲─────────────╱
               │ TRUE
               ▼
        ┌──────────────────────┐
        │  SWITCH INTO LIFETIME │
        │   PRESERVING MODE     │
S54     └──────────────────────┘
               │
               ▼
        ┌─────────────┐
        │     22      │
        └─────────────┘
```

FIG. 4

S4, S7

```
        ┌──────────┐
        │    22    │
        └──────────┘
             │
             ↓←──────────────────────────────────────────┐
        ┌─────────────────────────┐                       │
        │   OBTAINING CURRENT     │                       │
        │   PARAMETER VALUE       │                       │
S41     └─────────────────────────┘                       │
             │                                             │
             ↓                                             │
        ┌─────────────────────────┐                       │
        │   EVALUATING LIFECYCLE  │                       │
        │   CRITERION WITH        │                       │
        │   OBTAINED              │                       │
        │   PARAMETER VALUE       │                       │
S42     └─────────────────────────┘                       │
             │                                             │
             ↓                                             │
          ◇ PARAMETER                                      │
          VALUE MEETS LIFECYCLE ────TRUE──────┐            │
S43       CRITERION? ◇                        │            │
             │                                │            │
           FALSE                              │            │
             ↓                                │            │
        ┌─────────────────────────┐           │            │
        │   SWITCH INTO STANDBY   │           │            │
        │   MODE                  │           │            │
S44     └─────────────────────────┘           │            │
             │                                 ↓            │
             ↓                          ◇ LIGHTING         │
        ┌──────────┐                    REQUESTED ? ◇──FALSE┘
        │    20    │            S45
        └──────────┘                       │
                                         TRUE
                                           ↓
                                  ┌─────────────────────────┐
                                  │   SWITCH INTO LIGHTING  │
                                  │   MODE                  │
                            S46   └─────────────────────────┘
                                           │
                                           ↓
                                      ┌──────────┐
                                      │    21    │
                                      └──────────┘
```

FIG. 5

FIG. 6

FIG. 7

**REFERENCES CITED IN THE DESCRIPTION**

**Patent documents cited in the description**

- US 2016064947 A1